# EUROPÄISCHE PATENTSCHRIFT

(11) **EP 3 935 301 B1**
(45) Veröffentlichungstag und Bekanntmachung des Hinweises auf die Patenterteilung: **07.12.2022**
(21) Anmeldenummer: 20724022.7
(22) Anmeldetag: 29.04.2020
(51) Int. Cl.: F16L 13/02, F16L 58/08, F16L 58/10, F16L 58/18

(54) **METALLISCHES ROHR ZUM BEFÖRDERN VON ÖL UND GAS, MIT EINER METALLISCHEN BESCHICHTUNG IN EINEM ÜBERGANGSBEREICH**
METAL PIPE FOR CONVEYING OIL AND GAS, COMPRISING A METAL COATING IN A TRANSITION REGION
TUYAU MÉTALLIQUE POUR LE TRANSPORT DE PÉTROLE ET DE GAZ, COMPRENANT UN REVÊTEMENT MÉTALLIQUE DANS UNE ZONE DE TRANSITION

(30) Priorität: 29.04.2019 DE 102019206093
(43) Veröffentlichungstag der Anmeldung: 12.01.2022
(73) Patentinhaber: SMS Group GmbH, 40237 Düsseldorf (DE)
(72) Erfinder: VOCHSEN, Jochen, 41812 Erkelenz (DE); STARK, Michael, 88677 Markdorf (DE)
(74) Vertreter: Richly & Ritschel Patentanwälte PartG mbB
(86) Internationale Anmeldenummer: PCT/EP2020/061935
(87) Internationale Veröffentlichungsnummer: WO 2020/221819

(56) Entgegenhaltungen:
- WO-A2-2013/108036
- CN-A- 106 641 497
- CN-B- 103 008 988
- SU-A1- 372 403
- US-A- 4 611 833

## Beschreibung

### Gebiet:

Die Erfindung betrifft ein metallisches Rohr, insbesondere ein Rohr zum Befördern von Öl und Gas, mit einer metallischen Beschichtung in einem Übergangsbereich, ein System aus derartigen Rohren sowie ein Verfahren zur Herstellung des Rohres und des Systems aus Rohren.

### Stand der Technik:

Metallische Rohre, insbesondere Rohre zum Befördern von Öl und Gas, werden bei der Verlegung an den Rohrstößen miteinander verschweißt. Zum Verhindern von Korrosion oder Abrasion auf der Innenfläche des Rohrkörpers durch das Öl oder Gas bzw. deren Bestandteile sind diese typischerweise auf den Innenflächen mit einer Grundbeschichtung aus Kunststoff oder einem metallischen Werkstoff beschichtet. Durch den Wärmeeinfluss bei dem Verschweißen zweier metallischer Rohre kann sich diese Grundbeschichtung ganz oder teilweise im Bereich der Wärmeeinflusszone ablösen oder löchrig werden. Dadurch ist dieser Bereich nicht mehr gegen Korrosion oder Abrasion geschützt.

Bei einem ausreichend großen Rohrdurchmesser können diese Bereiche nachträglich wieder mit dieser Grundbeschichtung versehen werden. Dies reduziert aber die Verlegegeschwindigkeit und verursacht Anlagenkosten und / oder Materialkosten. Bei kleinen Rohrdurchmessern wird der Verschleiß an diesen Stellen bei der Auslegung der Materialdicke und Lebensdauer berücksichtigt und führt zu entsprechend höheren Stückkosten oder geringerer Lebensdauer.

CN 103008988 B offenbart ein metallisches Rohr zum Befördern von und Gas.

### Aufgabe der Erfindung:

Aufgabe der Erfindung ist es daher, ein auf der Innenfläche beschichtetes metallisches Rohr dahingehend weiterzuentwickeln, dass eine durchgehende verschleißhemmende Schicht bei einer Schweißverbindung zweier derartiger Rohre ohne eine Nachbeschichtung erhalten bleibt.

### Erfindung:

Die Aufgabe der Erfindung wird durch ein metallisches Rohr mit den Merkmalen des Anspruchs 1, ein System aus zumindest zwei erfindungsgemäßen metallischen Rohren mit den Merkmalen des Anspruchs 8, ein Verfahren zum Herstellen eines derartigen metallischen Rohres mit den Merkmalen des Anspruchs 10 und ein Verfahren zum Herstellen eines Systems aus zumindest zwei metallischen Rohren gemäß dem Anspruch 15 gelöst.

Der Übergangsbereich eines metallischen Rohres, insbesondere eines Rohres aus einem Stahlwerkstoff, ist auf der Innenfläche des Rohrkörpers mit einem metallischen, vorzugsweise schweißbaren, Werkstoff mit korrosions- und / oder abrasionsschützenden Eigenschaften beschichtet. Die zumindest teilweise Grundbeschichtung bedeckt auf der Innenseite des Rohrkörpers die metallische Beschichtung des Übergangsbereiches zumindest teilweise. Der Übergangsbereich ist dabei am Stoß des metallischen Rohres angeordnet und überdeckt die Wärmeeinflusszone einer möglichen Schweißnaht sowie einen zusätzlichen Bereich des Rohrkörpers so weit, dass durch die beim Verbinden zweier Rohre durch Schweißen eingebrachte Wärme die Grundbeschichtung des Rohrkörpers bzw. die Grundbeschichtung der metallischen Beschichtung nicht mehr schädigen kann. Hierdurch bleibt eine durchgehende Schutzschicht auf der Innenfläche des Rohres auch bei einer Schweißverbindung ohne zusätzliche Arbeiten erhalten.

Die metallische Beschichtung des Übergangsbereiches besteht bevorzugt aus einem metallischen Werkstoff, vorzugsweise aus einem schweißbaren, nichtrostendem Stahlwerkstoff, vorzugsweise aus dem Werkstoff 2.4856, insbesondere schweißbare metallische Werkstoffe, lassen sich gut auf ein übliches Stahlrohr auftragen. Nichtrostende Werkstoffe als Beschichtung sind beispielsweise sehr beständig gegen chemische Angriffe der teilweise schwefelsauren Öle oder Gase.

Idealerweise weist die metallische Beschichtung eine variable Dicke im Übergangsbereich, vorzugsweise eine zum Rohrstoß hin zunehmende Dicke, auf. Aus strömungstechnischer Sicht ist es bevorzugt, wenn keine Kanten auf der Innenfläche des Rohres nach der Beschichtung verbleiben. Durch variable Schichtdicken können diese Kanten reduziert werden.

Die metallische Beschichtung weist im Übergangsbereich eine mittlere Dicke von 0,1 mm bis 2 mm, vorzugsweise eine mittlere Dicke von 0,1 mm bis 1 mm, noch mehr bevorzugt eine mittlere Dicke von 0,2 mm bis 0,4 mm, auf. Im Bereich dieser Dicken liegt ein Optimum zwischen eingesetzten Material zu Beschichtung und Schutzwirkung bei einer üblichen Lebensdauer eines Rohres im Einsatz.

Vorzugsweise weist der Rohrstoß eine zumindest teilweise metallische Beschichtung, vorzugsweise aus dem gleichen Werkstoff wie die Beschichtung des Übergangsbereiches, auf. Hierdurch kann effektiv der Rohrstoß vor Verschleiß geschützt werden. Das Umgreifen des Rohrstoßes mit einer idealerweise durchgehenden metallischen Beschichtung verbessert die Verbindung zwischen Rohrwerkstoff und metallischer Beschichtung.

Die metallische Beschichtung des Rohrstoßes weist eine variable Dicke auf. Hierdurch können denkbare Verzahnungen, Oberflächenverläufe, die bisher durch den Rohrstoß selbst ausgebildet sind, auch durch einen beschichteten Rohrstoß ausgebildet werden.

Die metallische Beschichtung des Rohrstoßes weist eine mittlere Dicke von 0,1 mm bis 5 mm, vorzugsweise eine mittlere Dicke von 0,1 mm bis 1 mm, noch mehr bevorzugt eine mittlere Dicke von 0,2 mm bis 0,4 mm auf. Diese Dicken stellen ein Optimum zwischen erwünschter Schutzwirkung und Materialeinsatz dar. Bevorzugt ist die Länge des Rohrkörpers größer als 10 m. Ab dieser Länge ist meist eine nachträgliche Beschichtung einer Rohrverbindung nicht mehr sinnvoll möglich oder wirtschaftlich. Weiterhin weist der Rohrkörper bevorzugt einen Innendurchmesser von mehr als 150 mm, bevorzugt von mehr als 250 mm, auf. Diese Durchmesser werden bevorzugt im Pipelinebau verwendet. In diesem Anwendungsfall ist insbesondere die Verschleißfestigkeit von besonderer Bedeutung und die Verlegegeschwindigkeit dominiert die Investitionskosten. Beides wird durch eine erfindungsgemäße Ausführung eines metallischen Rohres verbessert.

Idealerweise ist eine Kante der metallischen Beschichtung des Übergangsbereiches und / oder des Rohrstoßes angefast. Dadurch muss die Kante vor einem Schweißvorgang nicht mehr vorbereitet werden. Die Fase an der Kante der metallischen Beschichtung bildet dabei bevorzugt einen Teil ein V- oder J-Nut aus. Diese Nuten sind verbreitete Formen bei der Verbindung von zwei Rohren durch Schweißen. Die Fase kann auch mit einer thermisch instabilen Beschichtung vor Korrosion geschützt werden, so dass ein Anschleifen der Fase vor dem Schweißen entfällt. Dadurch werden die Arbeitsschritte beim Herstellen einer Rohrleitung auf einer Baustelle reduziert.

Die Aufgabe der Erfindung wird weiterhin durch ein System aus zumindest zwei metallischen Rohren gemäß einem der Ansprüche 1 bis 7 mit den Merkmalen des **Anspruchs** 8 gelöst. Die metallischen Rohre sind durch eine Schweißnaht miteinander verbunden und weisen auf der Innenfläche eine durchgehende Beschichtung mit korrosions- und / oder abrasionsschützenden Eigenschaften auf. Ein derartiges System ermöglicht lange Rohrleitungen mit einer durchgehenden verschleißhemmenden Schutzschicht auf der Innenfläche der Rohrleitung. Schweißen ist dabei ein etabliertes Verfahren, insbesondere im Pipelinebau, zum Verbinden von einzelnen Rohren zu einer Rohrleitung.

Bevorzugt sind die metallischen Rohre durch eine Schweißnaht aus dem metallischen Beschichtungswerkstoff miteinander verschweißt. Insbesondere bei einer Verbindung mit einem Schweißvorgang auf der Innen- und Außenfläche bzw. Kante des Rohrstoßes bleibt die Schutzschicht auf der Innenseite erhalten.

Die Aufgabe der Erfindung wird auch gelöst durch ein Verfahren zum Herstellen eines metallischen Rohres nach einem der Ansprüche 1 bis 7 mit den Merkmalen des **Anspruchs** 10.

Der Übergangsbereich des Rohres wird mit einem metallischen Werkstoff mit korrosions- und / oder abrasionsschützenden Eigenschaften mittels einer Auftragsschweißung beschichtet und eine Grundbeschichtung wird anschließend auf der Innenfläche des Rohres aufgetragen, wobei die Grundbeschichtung die Innenfläche des Rohrkörpers und teilweise die metallische Beschichtung des Übergangsbereiches bedeckt. Auftragsschweißen umfasst im erfindungsgemäßen Sinne die Verfahren Plasmaspritzen, Laserauftragsschweißen oder auch ein Aufbringen einer Schicht durch ein Lichtbogenschweißverfahren.

Bevorzugt wird für die metallische Beschichtung des Übergangsbereiches ein metallischer Werkstoff, mehr bevorzugt ein schweißbarer, nichtrostender Werkstoff, überaus bevorzugt der Werkstoff 2.4856, verwendet. Metallische Werkstoffe, insbesondere schweißbare metallische Werkstoffe, lassen sich gut auf ein übliches Stahlrohr auftragen. Nichtrostende Werkstoffe als Beschichtung sind sehr beständig gegen beispielsweise chemische Angriffe der teilweise schwefelsauren Öle oder Gase.

Im Übergangsbereich wird idealerweise eine metallische Beschichtung mit einer variablen Dicke, vorzugsweise mit einer zum Rohrstoß hin zunehmenden Dicke, aufgetragen. Durch ein Auftragen mit zum Rohrstoß hin zunehmender Dicke der metallischen Beschichtung kann mit der nachfolgenden Beschichtung eine durchgehende Beschichtung ohne Kanten erzeugt werden. Dadurch wird der Druckverlust im Rohr bei der Durchleitung von Öl oder Gas reduziert.

Vorzugsweise wird die metallische Beschichtung im Übergangsbereich mit einer mittleren Dicke von 0,1 mm bis 2 mm, vorzugsweise mit einer mittlere Dicke von 0,1 mm bis 1 mm, noch mehr bevorzugt mit einer mittlere Dicke von 0,2 mm bis 0,4 mm, aufgetragen. Diese Schichtdicken lassen sich prozesssicher mit bekannten Verfahren auftragen und stellen ein Optimum zwischen Materialeinsatz und Verschleißschutz dar.

Zumindest teilweise wird der Rohrstoß bevorzugt mit einer metallischen Beschichtung, vorzugsweise mit dem gleichen Werkstoff wie die Beschichtung des Übergangsbereiches, beschichtet. Eine, vorzugsweise durchgehende, Beschichtung des Übergangsbereiches und des Rohrstoßes verbessert die Haftung der metallischen Beschichtung und verbessert die Verwendungseigenschaften beim Einbau und Betrieb des Rohres.

Auf den Rohrstoß wird eine metallische Beschichtung mit einer variablen Dicke aufgetragen. Hierdurch bleiben konstruktionsbedingte Oberflächenkonturen erhalten oder können erzeugt werden. Dies vereinfacht die Handhabung bei der Montage der Rohrleitung.

Die metallische Beschichtung des Rohrstoßes wird mit einer mittleren Dicke von 0,1 mm bis 2 mm, vorzugsweise mit einer mittleren Dicke von 0,1 mm bis 1 mm, noch mehr bevorzugt mit einer mittleren Dicke von 0,2 mm bis 0,4 mm, aufgetragen. Diese Dicken stellen ein Optimum zwischen Materialverbrauch bei der Beschichtung und erwünschtem Verschleißschutz dar.

Es werden bevorzugt Rohrkörper mit einer Länge größer als 10 m und / oder mit einem Innendurchmesser von mehr als 150 mm, mehr bevorzugt von mehr als 250 mm, verwendet. Ab diesen Grenzmaßen wir eine nachträgliche Beschichtung der Innenfläche üblicherweise unwirtschaftlich.

Eine Kante der metallischen Beschichtung des Übergangsbereiches und / oder des Rohrstoßes, vorzugsweise im Bereich einer Schweißnaht, wird angefast, wobei idealerweise ein Teil einer V- oder J-Nut in die Kante gefast wird. Hierdurch reduzieren sich die notwendigen Schritte bei der Herstellung einer Rohrleitung auf der Baustelle. Ein Teil der Vorbereitungsarbeiten entfällt, da üblicherweise die Schweißnähte beim Verbinden zweier Rohre in V oder J-Nuten gelegt werden. Bevorzugt wird in das noch unbeschichtete Rohr an den Rohrenden auf der Innenseite eine Auftragsschweißung ringförmig, vorzugsweise in eine Vertiefung des Rohrkörpers, aufgebracht und die Auftragsschweißung weist korrosions- und / oder abrasionsschützende Eigenschaften auf. Das Rohr wird anschließend von innen mit einem Grundbeschichtungsmaterial, versehen, wobei dabei ebenfalls ein Teil der Auftragsschweißung überlappend mit der Grundbeschichtung versehen wird.

Weiterhin wird die Aufgabe der Erfindung mit einem Verfahren mit den Merkmalen des **Anspruchs** 15 gelöst. Die Rohrstöße werden miteinander verschweißt, vorzugsweiße mit dem Werkstoff der metallischen Beschichtung.

Der Beschreibung der Erfindung sind die folgenden vier Figuren beigefügt:
- Figur 1:: Schnitt durch Rohr mit Beschichtung
- Figur 2:: Schnitt durch Rohr mit Beschichtung des Rohrstoßes
- Figur 3:: Schnitt durch Rohr mit Beschichtung in einer Vertiefung
- Figur 4:: Schnitt durch zwei verbundene Rohre ohne Schweißnaht
- Figur 5:: Schnitt durch zwei verbundene Rohre mit Schweißnaht

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

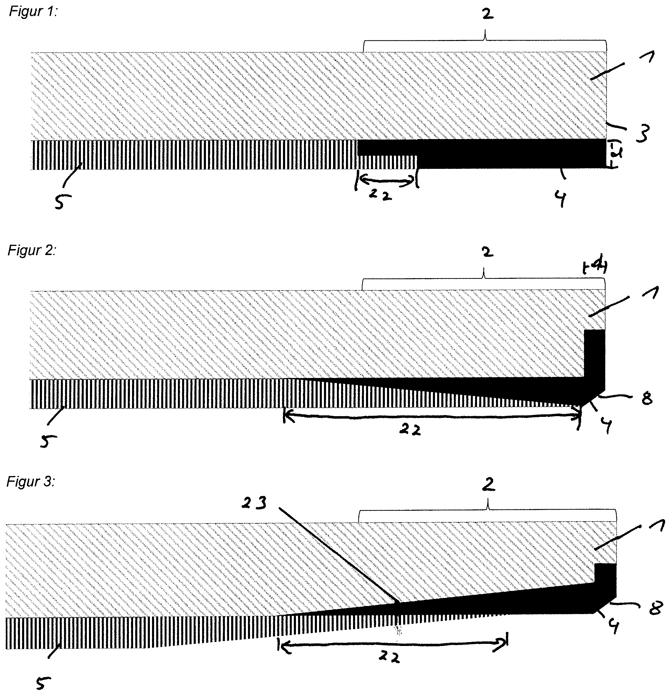

*Figur 1* zeigt einen Schnitt durch ein nicht erfindungsgemäßes metallisches Rohr zum Durchleiten von Öl oder Gas. Der Rohrkörper 1 besteht beispielsweise aus einem Kohlenstoffstahl und bildet die Struktur des metallischen Rohres. An dem Ende des Rohrkörpers 1 ist ein Übergangsbereich 2 angeordnet, der mit einer metallischen Beschichtung 4 versehen ist. Die metallische Beschichtung 4 weist eine zum Rohrstoß 3 hin zunehmende Dicke d auf. Eine Grundbeschichtung 5, hier beispielsweise eine Kunststoffschicht, ist auf die Innenfläche 6 des Rohrkörpers 1 aufgetragen, wobei die Kunststoffschicht 5 teilweise die metallische Beschichtung 4 überdeckt. Der Versatz in der metallischen Beschichtung 4 ermöglicht hierbei eine nahezu kantenfreie Innenfläche 6 des gesamten Rohres.

*Figur 2* zeigt einen Schnitt durch ein Rohr mit einer metallischen Beschichtung 4 des Übergangsbereiches 2 und eine zusätzlichen metallischen Beschichtung 4 des Rohrstoßes 3. Dabei ist die metallische Beschichtung 4 durchgehend ausgeführt, so dass sich in der Schnittansicht ein L-Form ergibt. Im Übergangsbereich 2 ist die metallische Beschichtung 4 zum Rohrstoß 3 kontinuierlich ansteigend ausgeführt. Der Rohrstoß 3 ist mit einer konstanten Dicke d beschichtet. Die Innenkante 61 der metallischen Beschichtung 4 ist zur Bildung einer teilweisen V-nut 8 entsprechend angefast.

*Figur 3* stellt einen Schnitt durch ein Rohr mit einer metallischen Beschichtung 4 des Übergangsbereiches 2 in einer Vertiefung 23 des Rohrkörpers 1 und eine zusätzlichen metallischen Beschichtung 4 des Rohrstoßes 3 dar. Dabei ist die metallische Beschichtung 4 des Rohrstoßes und Übergangsbereiches 2 durchgehend ausgeführt, so dass sich in der Schnittansicht ein L-Form ergibt. Im Übergangsbereich 2 überdeckt die Grundbeschichtung 5, erfindungsgemäß eine aufgespritze metallische Beschichtung, die metallische Beschichtung teilweise.

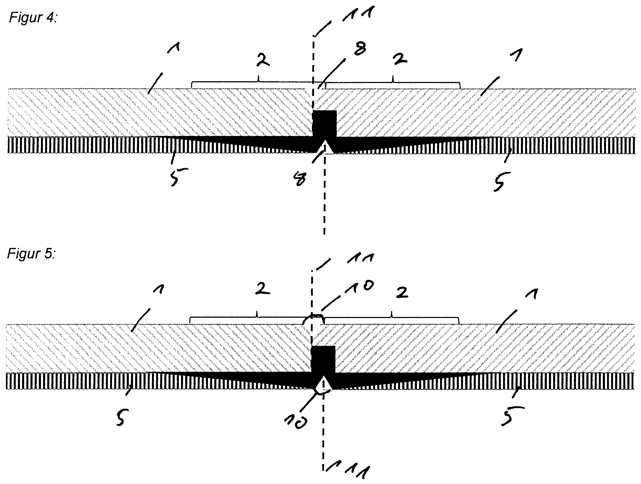

*Figur 4* zeigt einen Schnitt durch zwei nebeneinander angeordnete erfindungsgemäße Rohre. Die beiden Rohrstöße 3 sind in Kontakt miteinander, so dass sich eine durchgehende Beschichtung ausbildet. Die angefasten Kanten der metallischen Beschichtung 4 bilden dabei auf der Innen- und Außenkante 61, 71 eine V-Nut. Weiterhin weisen die zueinander benachbarten Rohrstöße 3 jeweils eine komplementäre Nut- / Federverbindung 11 auf, wobei ein Teil beschichtet bzw. durch die metallische Beschichtung 4 des Rohrstoßes 3 ausgebildet ist.

*Figur 5* zeigt den Schnitt der Figur 3 mit einer entsprechenden Schweißnaht 10 in den beiden V-Nuten 8 auf der Innen- bzw. Außenkante 61, 71 zum Verbinden der beiden Rohre zu einer Rohrleitung.

**Tabelle 1: Bezugszeichen**

| Nummer | | Beschreibung |
|---|---|---|
| | 1 | Rohrkörper |
| | 2 | Übergangsbereich |
| | 21 | Wärmeeinflußzone |
| | 22 | Überdeckungsbereich |
| | 23 | Vertiefung |
| | 3 | Rohrstoß |
| | 4 | metallische Beschichtung |
| | 5 | Grundbeschichtung |
| | 6 | Innenfläche |
| | 61 | Innenkante |
| | 7 | Außenfläche |
| | 71 | Außenkante |
| | 8 | Teil V-Nut |
| | 9 | Teil J-Nut |
| | 10 | Schweißnaht |
| | 11 | Nut / Feder Rohrkörper |
| | d | Dicke |
| | L | Länge |
| | D | Durchmesser |

## Patentansprüche

1. Metallisches Rohr zum Befördern von Öl und Gas, aufweisend einen Rohrkörper (1) mit einer Innen- und Außenfläche (6,7) und zwei Rohrstößen (3), wobei jeweils ein Übergangsbereich (2) am jeweiligen Ende des Rohrkörpers (1) angeordnet ist und die Innenfläche (6) des Rohrkörpers (1) zwischen den beiden Übergangsbereichen zumindest eine teilweise Grundbeschichtung (5) aufweist, wobei der Übergangsbereich (2) auf der Innenfläche (6) des Rohrkörpers (1) mit einem metallischen, schweißbaren Werkstoff mit korrosions- und / oder abrasionsschützenden Eigenschaften beschichtet ist; wobei die zumindest teilweise Grundbeschichtung (5) auf der Innenseite (6) des Rohrkörpers (1) die metallische Beschichtung (4) des Übergangsbereiches (2) teilweise bedeckt,
**dadurch gekennzeichnet, dass**
die Grundbeschichtung (5) eine aufgespritzte metallische Grundbeschichtung (5) ist.

2. Metallisches Rohr nach Anspruch 1, **dadurch gekennzeichnet, dass** die metallische Beschichtung (4) des Übergangsbereiches (2) aus einem metallischen Werkstoff, bevorzugt aus einem schweißbaren, nichtrostendem Werkstoff, mehr bevorzugt aus dem Werkstoff 2.4856 besteht.

3. Metallisches Rohr nach einem der vorangegangenen Ansprüche, **dadurch gekennzeichnet, dass** die metallische Beschichtung (4) eine variable Dicke (d) im Übergangsbereich (2), vorzugsweise eine zum Rohrstoß (3) hin zunehmende Dicke (d), aufweist.

4. Metallisches Rohr nach einem der vorangegangenen Ansprüche, **dadurch gekennzeichnet, dass** die metallische Beschichtung (4) im Übergangsbereich (2) eine mittlere Dicke (d) von 0,1 mm bis 2 mm, vorzugsweise eine mittlere Dicke (d) von 0,1 mm bis 1 mm, noch mehr bevorzugt eine mittlere Dicke (d) von 0,2 mm bis 0,4 mm, aufweist.

5. Metallisches Rohr nach einem der vorangegangenen Ansprüche, **dadurch gekennzeichnet, dass** der Rohrstoß (3) eine zumindest teilweise metallische Beschichtung (4) aufweist, vorzugsweise aus dem gleichen Werkstoff wie die metallische Beschichtung (4) des Übergangsbereiches (2).

6. Metallisches Rohr nach einem der vorangegangenen Ansprüche, **dadurch gekennzeichnet, dass** die Länge (L) des Rohrkörpers (1) größer als 10 m ist.

7. Metallisches Rohr nach einem der vorangegangenen Ansprüche, **dadurch gekennzeichnet, dass** der Rohrkörper (1) einen Innendurchmesser (D) von mehr als 150 mm, bevorzugt von mehr als 250 mm, aufweist.

8. System aus zumindest zwei metallischen Rohren gemäß einem der Ansprüche 1 bis 7, **dadurch gekennzeichnet, dass**
- die metallischen Rohre durch eine Schweißnaht (10) miteinander verbunden sind; und
- zumindest zwei miteinander verschweißte Rohre eine auf der Innenfläche (6) durchgehende Beschichtung (4,5) mit korrosions- und / oder abrasionsschützenden Eigenschaften aufweisen.

9. System aus zumindest zwei metallischen Rohren nach Anspruch 8, **dadurch gekennzeichnet, dass** die metallischen Rohre durch eine Schweißnaht (10) aus dem metallischen Beschichtungswerkstoff miteinander verschweißt sind.

10. Verfahren zum Herstellen eines metallischen Rohres nach einem der Ansprüche 1 bis 7, wobei mehrfach eine Beschichtung auf der Innenfläche (6) des Rohrkörpers aufgetragen wird, **dadurch gekennzeichnet, dass**
- der Übergangsbereich (2) des Rohrkörpers (1) mit einem metallischen Werkstoff mit korrosions- und / oder abrasionsschützenden Eigenschaften mittels einer Auftragsschweißung beschichtet wird; und
- eine Grundbeschichtung (5) auf der Innenfläche (6) des Rohrkörpers (1) aufgetragen wird, die die Innenfläche (6) des Rohrkörpers (1) und teilweise die metallische Beschichtung (4) des Übergangsbereiches (2) bedeckt.

11. Verfahren zum Herstellen eines metallischen Rohres nach Anspruch 10, **dadurch gekennzeichnet, dass** für die metallische Beschichtung (4) des Übergangsbereiches (2) ein metallischer Werkstoff, bevorzugt ein schweißbarer, nichtrostender Werkstoff, mehr bevorzugt der Werkstoff 2.4856 verwendet wird.

12. Verfahren zum Herstellen eines metallischen Rohres nach einem der Ansprüche 10 oder 11, **dadurch gekennzeichnet, dass** im Übergangsbereich (2) eine metallische Beschichtung (4) mit einer variablen Dicke (d), vorzugsweise mit einer zum Rohrstoß (3) hin zunehmenden Dicke (d), aufgetragen wird.

13. Verfahren zum Herstellen eines metallischen Rohres nach einem der Ansprüche 10 bis 12, **dadurch gekennzeichnet, dass** die metallische Beschichtung (4) im Übergangsbereich (2) mit einer mittleren Dicke (d) von 0,1 mm bis 2 mm, vorzugsweise mit einer mittlere Dicke (d) von 0,1 mm bis 1 mm, noch mehr bevorzugt mit einer mittlere Dicke (d) von 0,2 mm bis 0,4 mm, aufgetragen wird.

14. Verfahren zum Herstellen eines metallischen Rohres nach einem der Ansprüche 10 bis 13, **dadurch gekennzeichnet, dass**
- in das noch unbeschichtete Rohr an den Rohrenden auf der Innenseite eine Auftragsschweißung ringförmig aufgebracht wird; und
- die Auftragsschweißung korrosions- und / oder abrasionsschützende Eigenschaften aufweist; und
- das Rohr von innen mit dem Grundbeschichtungsmaterial versehen wird, wobei dabei ebenfalls ein Teil der Auftragsschweißung überlappend mit der Schicht der Grundbeschichtung versehen wird.

15. Verfahren zum Herstellen eines Systems aus zumindest zwei metallischen Rohren gemäß einem der Ansprüche 1 bis 7, **dadurch gekennzeichnet, dass** die Rohrstöße (3) miteinander verschweißt werden, vorzugsweiße mit dem Werkstoff der metallischen Beschichtung.

## Claims

1. Metal pipe for conveying oil and gas, comprising a pipe body (1) with an inner and outer surface (6, 7) and two pipe joints (3), wherein a transition region (2) is arranged at the corresponding end of the pipe body (1) and the inner surface (6) of the pipe body (1) having at least a partial base coating (5) between the two transition regions, wherein the transition region (2) is coated on the inner surface (6) of the pipe body (1) with a weldable metal material with anti-corrosion and/or anti-abrasion properties; wherein the at least partial base coating (5) on the inside (6) of the pipe body (1) partially covers the metal coating (4) of the transition region (2),
**characterized in that**
the base coating (5) is a sprayed-on metal base coating (5).

2. Metal pipe according to claim 1, **characterized in that** the metal coating (4) of the transition region (2) consists of a metal material, preferably of a weldable, stainless material, more preferably of the material 2.4856.

3. Metal pipe according to any of the preceding claims, **characterized in that** the metal coating (4) has a variable thickness (d) in the transition region (2), preferably a thickness (d) that increases toward the pipe joint (3).

4. Metal pipe according to any of the preceding claims, **characterized in that** the metal coating (4) in the transition region (2) has an average thickness (d) of 0.1 mm to 2 mm, preferably an average thickness (d) of 0.1 mm to 1 mm, even more preferably an average thickness (d) of 0.2 mm to 0.4 mm.

5. Metal pipe according to any of the preceding claims, **characterized in that** the pipe joint (3) has a coating (4) that is at least partially made of metal, preferably the pipe joint is made of the same material as the metal coating (4) of the transition region (2).

6. Metal pipe according to any of the preceding claims, **characterized in that** the length (L) of the pipe body (1) is greater than 10 m.

7. Metal pipe according to any of the preceding claims, **characterized in that** the pipe body (1) has an inner diameter (D) of more than 150 mm, preferably of more than 250 mm.

8. System of at least two metal pipes according to any of claims 1 to 7, **characterized in that**
- the metal pipes are connected to one another by a weld seam (10); and
- at least two pipes welded to one another have a continuous coating (4, 5) on the inner surface (6) with anti-corrosion and/or anti-abrasion properties.

9. System of at least two metal pipes according to claim 8, **characterized in that** the metal pipes are welded to one another by a weld seam (10) made from the metal coating material.

10. Method for producing a metal pipe according to any of claims 1 to 7, a coating being applied multiple times to the inner surface (6) of the pipe body, **characterized in that**
- the transition region (2) of the pipe body (1) is coated with a metal material with anti-corrosion and/or anti-abrasion properties by means of build-up welding; and
- a base coating (5) is applied to the inner surface (6) of the pipe body (1), which covers the inner surface (6) of the pipe body (1) and partially covers the metal coating (4) of the transition region (2).

11. Method for producing a metal pipe according to claim 10, **characterized in that** a metal material, preferably a weldable, stainless material, more preferably the material 2.4856, is used for the metal coating (4) of the transition region (2).

12. Method for producing a metal pipe according to either claim 10 or claim 11, **characterized in that** a metal coating (4) is applied in the transition region (2) with a variable thickness (d), preferably with a thickness (d) that increases toward the pipe joint (3).

13. Method for producing a metal pipe according to claim 10 to 12, **characterized in that** the metal coating (4) is applied in the transition region (2) with an average thickness (d) of 0.1 mm to 2 mm, preferably with an average thickness (d) of 0.1 mm to 1 mm, even more preferably with an average thickness (d) of 0.2 mm to 0.4 mm.

14. Method for producing a metal pipe according to claim 10 to claim 13, **characterized in that**
- a build-up weld is applied in the form of a ring in the as yet uncoated pipe at the pipe ends on the inside; and
- the build-up weld has anti-corrosion and/or anti-abrasion properties; and
- the pipe is provided with the base coating material from the inside, with part of the build-up weld also being provided with the layer of the base coating in an overlapping manner.

15. Method for producing a system of at least two metal pipes according to any of claims 1 to 7, **characterized in that** the pipe joints (3) are welded together, preferably with the material of the metal coating.

## Revendications

1. Tuyau métallique permettant le transport de pétrole et de gaz, présentant un corps de tuyau (1) comportant des surfaces intérieure et extérieure (6, 7) et deux bords de tuyau (3), respectivement une région de transition (2) étant disposée à l'extrémité respective du corps de tuyau (1) et la surface intérieure (6) du corps de tuyau (1) présentant au moins un revêtement de base (5) partiel entre les deux régions de transition, la région de transition (2) sur la surface intérieure (6) du corps de tuyau (1) étant revêtue d'un matériau métallique soudable comportant des propriétés anti-corrosion et/ou anti-abrasion ; le revêtement de base (5) au moins partiel recouvrant partiellement le revêtement (4) métallique de la région de transition (2) sur la surface intérieure (6) du corps de tuyau (1),
**caractérisé en ce que**
le revêtement de base (5) est un revêtement de base (5) métallique pulvérisé.

2. Tuyau métallique selon la revendication 1, **caractérisé en ce que** le revêtement (4) métallique de la région de transition (2) est constitué d'un matériau métallique, de préférence d'un matériau soudable et inoxydable, de manière davantage préférée du matériau 2.4856.

3. Tuyau métallique selon l'une des revendications précédentes, **caractérisé en ce que** le revêtement (4) métallique présente une épaisseur (d) variable dans la région de transition (2), de préférence une épaisseur (d) croissante vers le bord de tuyau (3).

4. Tuyau métallique selon l'une des revendications précédentes, **caractérisé en ce que** le revêtement (4) métallique dans la région de transition (2) présente une épaisseur (d) moyenne de 0,1 mm à 2 mm, de préférence une épaisseur (d) moyenne de 0,1 mm à 1 mm, de manière encore davantage préférée une épaisseur (d) moyenne de 0,2 mm à 0,4 mm.

5. Tuyau métallique selon l'une des revendications précédentes, **caractérisé en ce que** le bord de tuyau (3) présente un revêtement (4) au moins partiellement métallique, de préférence constitué du même matériau que le revêtement (4) métallique de la région de transition (2).

6. Tuyau métallique selon l'une des revendications précédentes, **caractérisé en ce que** la longueur (L) du corps de tuyau (1) est supérieure à 10 m.

7. Tuyau métallique selon l'une des revendications précédentes, **caractérisé en ce que** le corps de tuyau (1) présente un diamètre intérieur (D) supérieur à 150 mm, de préférence supérieur à 250 mm.

8. Système constitué d'au moins deux tuyaux métalliques selon l'une des revendications 1 à 7, **caractérisé en ce que**
- les tuyaux métalliques sont raccordés l'un à l'autre par un cordon de soudure (10) ; et
- au moins deux tuyaux soudés l'un à l'autre présentent un revêtement (4, 5) continu sur la surface intérieure (6) comportant des propriétés anti-corrosion et/ou anti-abrasion.

9. Système constitué d'au moins deux tuyaux métalliques selon la revendication 8, **caractérisé en ce que** les tuyaux métalliques sont soudés l'un à l'autre par un cordon de soudure (10) constitué du matériau de revêtement métallique.

10. Procédé de fabrication d'un tuyau métallique selon l'une des revendications 1 à 7, dans lequel un revêtement est appliqué plusieurs fois sur la surface intérieure (6) du corps de tuyau, **caractérisé en ce que**
- la région de transition (2) du corps de tuyau (1) est revêtue d'un matériau métallique comportant des propriétés anti-corrosion et/ou anti-abrasion au moyen d'un soudage par superposition ; et
- un revêtement de base (5) est appliqué sur la surface intérieure (6) du corps de tuyau (1) et recouvre la surface intérieure (6) du corps de tuyau (1) et partiellement le revêtement (4) métallique de la région de transition (2).

11. Procédé de fabrication d'un tuyau métallique selon la revendication 10, **caractérisé en ce qu'**un matériau métallique, de préférence un matériau soudable et inoxydable, de manière davantage préférée le matériau 2.4856, est utilisé pour le revêtement (4) métallique de la région de transition (2).

12. Procédé de fabrication d'un tuyau métallique selon l'une des revendications 10 ou 11, **caractérisé en ce qu'**un revêtement (4) métallique comportant une épaisseur (d) variable, de préférence comportant une épaisseur (d) croissante vers le bord de tuyau (3), est appliqué dans la région de transition (2).

13. Procédé de fabrication d'un tuyau métallique selon l'une des revendications 10 à 12, **caractérisé en ce que** le revêtement (4) métallique est appliqué dans la région de transition (2) avec une épaisseur (d) moyenne de 0,1 mm à 2 mm, de préférence avec une épaisseur (d) moyenne de 0,1 mm à 1 mm, de manière encore davantage préférée avec une épaisseur (d) moyenne de 0,2 mm à 0,4 mm.

14. Procédé de fabrication d'un tuyau métallique selon l'une des revendications 10 à 13, **caractérisé en ce que**
- dans le tuyau encore non revêtu, une soudure par superposition en forme d'anneau est appliquée sur les extrémités du tuyau sur la surface intérieure ; et
- la soudure par superposition présente des propriétés anti-corrosion et/ou anti-abrasion ; et
- le tuyau est pourvu du matériau de revêtement de base de l'intérieur, une partie de la soudure par superposition étant également pourvue de la couche du revêtement de base de manière à se chevaucher.

15. Procédé de fabrication d'un système constitué d'au moins deux tuyaux métalliques selon l'une des revendications 1 à 7, **caractérisé en ce que** les bords de tuyau (3) sont soudés l'un à l'autre, de préférence avec le matériau du revêtement métallique.
